# FASCICULE DE BREVET EUROPEEN

(11) **EP 2 362 110 B1**
(45) Date de publication et mention de la délivrance du brevet: **11.09.2013**
(21) Numéro de dépôt: 11154356.7
(22) Date de dépôt: 14.02.2011
(51) Int. Cl.: F16D 13/64

(54) **Procédé de fabrication d'un organe de friction**
Verfahren zum Herstellen eines Reibelements
Method of fabricating a friction element

(30) Priorité: 22.02.2010 FR 1051239
(43) Date de publication de la demande: 31.08.2011
(73) Titulaire: Valeo Matériaux de Friction, 87020 Limoges (FR)
(72) Inventeur: Boutaud, Jean-Pierre, 87350 Panazol (FR); Boyer, Gérard, 87480 Saint Priest Taurion (FR); Pineda, Philippe, 19100 Brives La Gaillarde (FR); Alix, Isabelle, 87290 Chateauponsac (FR); Minamont, Thierry, 87700 Aixe Sur Vienne (FR)
(74) Mandataire: Jeuland, Mickaël

(56) Documents cités:
- DE-A1- 3 712 715
- FR-A- 1 304 067
- FR-A1- 2 583 482
- FR-A1- 2 916 028
- US-A- 2 259 461

## Description

La présente invention concerne un procédé de fabrication d'un organe comportant une garniture de frottement.

Un disque de friction d'embrayage est de façon générale solidaire en rotation d'un arbre dit mené et est disposé entre un plateau de réaction et un plateau de pression d'un mécanisme d'embrayage, solidaires en rotation d'un arbre dit menant.

Lors d'une opération d'embrayage, le plateau de pression serre les organes de friction du disque de friction d'embrayage contre le plateau de réaction, le couple de l'arbre menant étant alors transmis à l'arbre mené.

Un procédé selon le préambule de la revendication 1 est connu de DE-A-37 12 715.

Un organe de friction classique décrit dans le document FR 2 916 028, au nom du Demandeur, comprend une garniture de frottement fixée à un support métallique. Des premiers trous d'un diamètre constant sont percés au travers de la garniture et du support. Des seconds trous sont ensuite percés au travers de la garniture et du support, à l'aide d'un outil coupant de lamage qui comporte une première partie d'un faible diamètre, pour percer la garniture de frottement et le support, et une seconde partie de plus grand diamètre, pour enlever de la matière sur une partie seulement de l'épaisseur de la garniture de frottement afin de former un lamage.

La réalisation d'un tel organe de friction est relativement complexe et coûteuse. En outre, le perçage des supports métalliques peut être difficile lorsque ces supports ont des duretés élevées, par exemple lorsqu'ils sont en acier trempés. Les forets utilisés sont alors usés prématurément.

L'invention a notamment pour but d'apporter une solution simple, efficace et économique à ces problèmes.

A cet effet, elle propose un procédé de fabrication d'un organe de friction du type décrit ci-dessus, caractérisé en ce qu'il comporte les étapes consistant à :
- réaliser les premiers trous du premier diamètre par poinçonnage traversant la garniture de frottement et le support ;
- réaliser des seconds trous du second diamètre par poinçonnage traversant la garniture de frottement et le support, et élargir par usinage le diamètre des premières parties des seconds trous sur toute l'épaisseur de la garniture de frottement.

Selon un mode préféré de réalisation, l'élargissement de la première partie des seconds trous est réalisé par perçage de la garniture à l'aide d'un foret à fond plat.

L'opération de poinçonnage est peu coûteuse et moins complexe à réaliser qu'une opération de perçage classique. Le poinçonnage peut également être réalisé aisément, même lorsque le matériau à usiner a une dureté élevée. De plus, l'utilisation d'un foret à fond plat est moins complexe et moins coûteuse que l'utilisation d'un outil coupant de lamage.

Aussi, l'invention concerne également un disque de friction d'embrayage équipé d'organes de friction comportant une garniture de frottement fixée à un support métallique, et des premiers trous de diamètre constant formés à travers la garniture et le support caractérisé en ce qu'il comporte des seconds trous comportant une première partie d'un premier diamètre traversant la garniture, et une seconde partie d'un second diamètre inférieur au premier diamètre, découpée par un outillage de type découpe poinçonnage à travers le support.

Pour usiner les seconds trous il n'est alors pas nécessaire d'utiliser un outil de lamage de la garniture perçant en même temps le support métallique avec une partie de l'outil de type mèche de perçage. La fabrication de l'organe de friction selon l'invention est donc moins coûteuse.

Selon une variante, le diamètre des premiers trous est égal au premier diamètre des seconds trous.

L'invention concerne également un disque support d'organe de friction comportant des organes de friction du type décrit ci-dessus, fixés sur ses faces opposées par des rivets montés dans des perçages du disque et dans les seconds trous correspondants des organes de friction, caractérisé en ce que les premiers trous des organes de friction fixés sur une face du disque sont alignés avec des seconds trous d'autres organes de friction fixés sur l'autre face du disque.

Les premiers trous servent au passage d'un outil de rivetage destiné à réaliser, par déformation du rivet, une collerette ou une tête de fixation de l'organe de friction correspondant sur le disque.

Avantageusement, le disque est un disque progressif.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe axiale d'un disque de friction d'embrayage selon l'invention ;
- la figure 2 est une vue en coupe axiale d'une partie du disque de friction d'embrayage, illustrant en particulier la fixation par rivets des organes de friction au disque support d'organe de friction;
- les figures 3 à 5 sont des vues illustrant les différentes étapes de perçage d'un organe de friction selon l'invention.

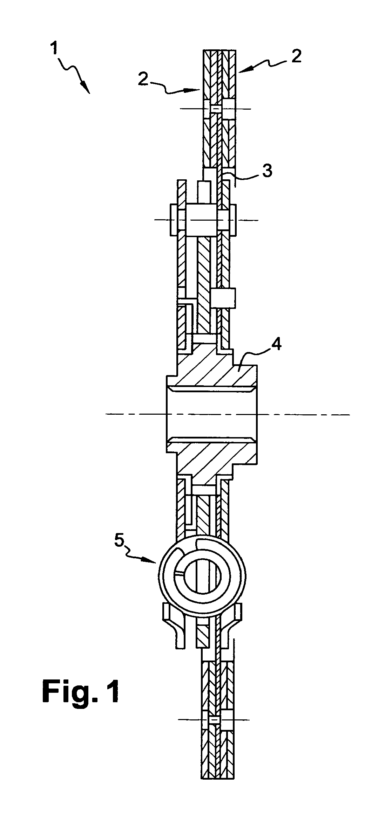

Un disque de friction d'embrayage à sec 1 selon l'invention est illustré à la figure 1. II comporte des organes de friction 2 fixés en périphérie d'un disque support d'organe de friction 3, sur les deux faces de celui-ci. Le disque 3 est monté sur un moyeu cannelé 4 par l'intermédiaire d'un dispositif amortisseur de torsion 5.

Le disque est un disque progressif 3, par exemple du type représenté aux figures 7 et 8 du brevet FR 1 304 067. Ce disque 3 se présente sous la forme d'une couronne dont la périphérie externe est fragmentée de manière à présenter des ailettes solidaires de la couronne. Ces ailettes sont ondulées et sont alternativement pliées de façon à comporter des portions décalées, de part et d'autre d'un plan moyen. Ces ailettes sont ainsi susceptibles d'être déformées élastiquement en rapprochant ou écartant axialement les organes de friction 2 fixés sur les deux faces du disque.

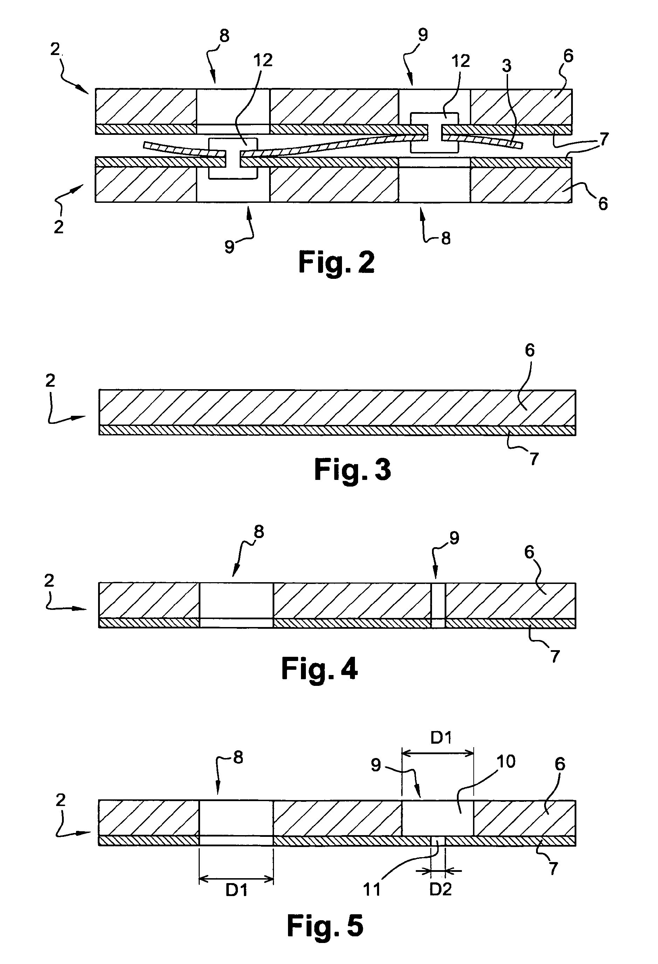

Comme cela est mieux visible à la figure 2, chaque organe de friction 2 comporte une garniture de frottement 6 collée à un support métallique 7 formé par une tôle fine en acier ou un clinquant. En variante la garniture de frottement 6 est liée au support métallique 7 par surmoulage sans apport de colle. Une garniture de frottement courante destinée à des véhicules automobiles de tourisme a une épaisseur de 3 mm et une garniture de frottement courante destinée à des véhicules industriels, notamment poids lourds, a une épaisseur de 4,5 mm. Les supports 7 ont une épaisseur de l'ordre de quelques dixièmes de millimètres, par exemple comprise entre 0,2 et 0,3 mm.

Chaque organe de friction 2 comporte des premiers trous 8 de diamètre constant formés à travers la garniture 6 et le support 7 et des seconds trous 9 comportant une première partie 10 (figure 5) d'un premier diamètre D1 traversant la garniture 6, et une seconde partie 11 d'un second diamètre D2 inférieur au premier diamètre D1, traversant le support 7. Le diamètre des premiers trous 8 peut être égal au premier diamètre D1 des seconds trous 9.

Les organes de friction 2 sont fixés sur les faces opposées du disque support d'organe de friction 3 par des rivets 12 montés dans des perçages du disque 3 et dans les seconds trous correspondants 9 des organes de friction 2. En outre, les premiers trous 8 des organes de friction fixés sur une face du disque 3 sont alignés avec des seconds trous 9 d'organes de friction 2, fixés sur l'autre face du disque 3.

On décrit ci-après le procédé de perçage des organes de friction, en référence aux figures 3 à 5.

Un organe de friction non percé est représenté schématiquement en figure 3.

Les premiers trous 8, de diamètre D1, sont réalisés dans cet organe de friction par poinçonnage traversant la garniture de frottement 6 et le support 7 (figure 4).

En outre, des seconds trous 9 de diamètre D2 traversant la garniture de frottement 6 et le support 7 sont réalisés par poinçonnage (figure 4), ces trous 9 étant ensuite élargis par usinage de manière à former la première partie 10 de diamètre D1 à travers la garniture 6, jusqu'à la seconde partie 11 de diamètre D2 traversant le support 7. Plus précisément, l'élargissement de la première partie 10 des seconds trous 9 est réalisé par perçage de la garniture 6 à l'aide d'un foret à fond plat.

Les opérations de perçage à l'aide d'un foret sont ainsi limitées par rapport à l'art antérieur, puisque seules les premières parties 10 des seconds trous 9 sont ainsi réalisées. Les coûts de fabrication des organes de friction sont donc réduits.

En outre, un tel procédé est avantageux en ce que les trous dans les supports 7 sont uniquement réalisés par des étapes de poinçonnage facilement exécutables, même dans des matériaux présentant des duretés élevées.

## Revendications

1. Procédé de fabrication d'un organe de friction (2) comportant une garniture de frottement (6) fixée à un support métallique (7) et des premiers trous (8) de diamètre constant formés à travers la garniture (6) et le support (7) et des seconds trous (9) comportant une première partie (10) d'un premier diamètre (D1) traversant la garniture (6), et une seconde partie (11) d'un second diamètre (D2) inférieur au premier diamètre (D1), découpée à travers le support (7) **caractérisé en ce qu'**il comporte les étapes consistant à :
- réaliser les premiers trous (8) au diamètre D1 par poinçonnage traversant la garniture de frottement (6) et le support (7) ;
- réaliser des seconds trous (9) du second diamètre (D2) par poinçonnage traversant la garniture de frottement (6) et le support (7), et élargir par usinage le diamètre des premières parties (10) des seconds trous (9) sur toute l'épaisseur de la garniture de frottement (6).

2. Procédé selon la revendication 1, **caractérisé en ce que** l'élargissement de la première partie (10) des seconds trous (9) est réalisé par perçage de la garniture (6) à l'aide d'un foret à fond plat.

## Patentansprüche

1. Verfahren zur Herstellung eines Reiborgans (2), das einen an einem metallischen Träger (7) befestigten Reibbelag (6) und erste Löcher (8), die mit konstantem Durchmesser quer durch den Belag (6) und den Träger (7) ausgeformt sind, und zweite Löcher (9) umfasst, die einen den Belag (6) durchquerenden ersten Teil (10) mit einem ersten Durchmesser (D1) und einen quer durch den Träger (7) geschnittenen zweiten Teil (11) mit einem zweiten Durchmesser (D2), welcher kleiner ist als der erste Durchmesser (D1), aufweisen, **dadurch gekennzeichnet, dass** es die Schritte umfasst, die darin bestehen:
- die ersten Löcher (8) mit Durchmesser (D1) durch den Reibbelag (6) und den Träger (7) durchquerendes Stanzen auszuführen;
- zweite Löcher (9) des zweiten Durchmessers (D2) durch den Reibbelag (6) und den Träger (7) durchquerendes Stanzen auszuführen, und den Durchmesser der ersten Teile (10) der zweiten Löcher (9) über die gesamte Dicke des Reibbelags (6) durch Bearbeitung zu erweitern.

2. Verfahren nach Anspruch 1, **dadurch gekennzeichnet, dass** die Erweiterung des ersten Teils (10) der zweiten Löcher (9) durch Ausbohren des Belags (6) mit Hilfe eines Flachgrundbohrers ausgeführt wird.

## Claims

1. Manufacturing procedure of a gear device (2) comprising a friction trim (6) fixed to a metallic support (7) and first holes (8) of constant diameter formed through the trim (6) and the support (7) and second holes (9) comprising a first part (10) of a first diameter (D1) crossing the trim (6), and a second part (11) of a second diameter (D2) less than the first diameter (D1), cut through the support (7) **characterised in** so far as it comprises the consisting of the following:
- making the first holes (8) at the diameter D1 by punching, crossing the friction trim (6) and the support (7);
- making second holes (9) of the second diameter (D2) by punching, crossing the friction trim (6) and the support (7), and widening by milling the diameter of the first parts (10) of the second holes (9) over the entire thickness of the friction trim (6).

2. Procedure according to claim 1, **characterised in** so far as the widening of the first part (10) of the second holes (9) is carried out by drilling the trim (6) with the aid of a flat-bottomed drill-bit.
